# EUROPEAN PATENT SPECIFICATION

(11) **EP 1 223 801 B1**
(45) Date of publication and mention of the grant of the patent: **13.08.2003**
(21) Application number: 00967451.6
(22) Date of filing: 03.10.2000
(51) Int. Cl.: A01K 21/00, A61D 3/00, A61D 19/02, A61D 17/00

(54) **BOAR CART FOR INSEMINATION OF SOWS**
EBERWAGEN ZUR BEFRUCHTUNG VON SAUEN
CHARIOT A VERRAT UTILISE POUR L'INSEMINATION DE TRUIES

(30) Priority: 04.10.1999 CA 2284395
(43) Date of publication of application: 24.07.2002
(73) Proprietor: Conception Ro-Main, St. Bernard, Quebec G0S 2G0 (CA)
(72) Inventor: KLEINASSASER, Jonathan, Ste. Agathe, Manitoba R0G 1Y0 (CA)
(74) Representative: Pratt, David Martin
(86) International application number: CA0001128
(87) International publication number: WO01024620

(56) References cited:
- DATABASE WPI Week 20005 Derwent Publications Ltd., London, GB; AN 2000-053899 XP002159922 & CA 2 270 319 A (LABRECQUE), 22 August 1999 (1999-08-22)

## Description

This invention relates to a boar cart for use in transporting a boar adjacent to a series of pens containing sows during insemination of the sows.

In high intensity rearing of pigs, sows after farrowing are moved to an area where they are maintained in separate pens awaiting insemination at the suitable time of estrous. The sows are maintained in separate pens in rows on one or both sides of dividing alleyways, so that the farm-hand can move along the row of sows both at the front and rear to access the sows for insemination and for various other purposes.

The alleyways between the rows can range in width from 45.72 cm (18 inches) up to 91.44cm (26 inches) in most cases, and in some cases the alleyways are wider still. The alleyways are defined between rows of pens and of course at the end of the rows the alley runs through a right-angle, so that passage can be obtained along one end of the rows and then back between the next set of rows where another right-angle turn is required.

It is well known in artificial insemination that it is desirable to bring a boar to the sows, both for the purposes of stimulating the sows by close physical contact with the boar, and for determining whether a particular sow is in estrous. The presence of the boar is known to improve the effectiveness of the artificial insemination, both by allowing the farm-hand more accurately to determine the presence of estrous, and in addition to place the sow in a more accepting condition for the insemination.

Conventionally, a boar is led along the front of the stalls so as physically to contact or aproach each sow in turn, while the farm-hand takes the necessary actions for carrying out insemination of those sows found to be in estrous. This requires the manual handling of a very large powerful animal by one or more additional farm-hands.

The prior art, therefore, discloses various designs of remote controlled cart which allows the boar to be moved or transported along the alleyway in front of the row of sows in their pens, while the farm-hand carries out the necessary actions for insemination.

CA-A-2270319 relates to a boar cart for carrying a boar through alleyways of a sow insemination area for interaction with the sows during insemination, the cart comprising:
a cage assembly for containing the boar, the assembly comprising a cage floor on which the boar stands, two cage sides each on a respective side of a longitudinal centre line of the cage assembly for confining the boar so that the boar is maintained extending longitudinally of the cage assembly, a cage front and a cage rear for confining the boar against forward and rearward movement;
the cage assembly having at least one door allowing entry and exit of the boar from the cage assembly;
the cage assembly being mounted on ground wheels for movement generally longitudinally along an alleyway carrying the boar within the cage assembly;
the cage assembly having a front portion for receiving the front feet and forward portion of the boar, and a rear portion for receiving the rear feet and rearward portion of the boar; and
the front portion being connected to the rear portion for pivotal movement about a vertical pivot axis to allow the cage assembly to navigate around a corner from one alleyway to another.

It is an aim of the present invention to provide an improved boar cart which allows improved control over the movement of the cart.

According to the invention there is provided a boar cart for carrying a boar through alleyways of a sow insemination area for interaction with the sows during insemination, the cart comprising:
a cage assembly for containing the boar, the assembly comprising a cage floor on which the boar stands, two cage sides each on a respective side of a longitudinal centre line of the cage assembly for confining the boar so that the boar is maintained extending longitudinally of the cage assembly, a cage front and a cage rear for confining the boar against forward and rearward movement;
the cage assembly having at least one door allowing entry and exit of the boar from the cage assembly;
the cage assembly being mounted on ground wheels for movement generally longitudinally along an alleyway carrying the boar within the cage assembly;
the cage assembly having a front portion for receiving the front feet and forward portion of the boar, and a rear portion for receiving the rear feet and rearward portion of the boar; and
the front portion being connected to the rear portion for pivotal movement about a vertical pivot axis to allow the cage assembly to navigate around a corner from one alleyway to another;
characterised in that the pivotal movement is provided by a pivot coupling locating the vertical pivot axis substantially at the centre line such that the cage assembly can articulate from a straight-ahead, aligned position both to the left and to the right for navigating left and right corners in the alleyways while the boar is retained in the cage assembly.

Preferably, the cage assembly includes a top member parallel to the floor, the top member being arranged at a top of the side walls, and wherein the pivot coupling includes a first bearing member at the floor and a second bearing member at the top member.

Preferably, the front portion includes a front portion of the floor, and the rear portion includes a rear portion of the floor, with the front portion of the floor and the rear portion of the floor being arranged to overlap at the straight-ahead position and when articulated to the left and to the right to allow the boar to stand on the floor while the boar is retained in the cage assembly.

Preferably, the side walls of the front portion are separate from the side walls of the rear portion such that the side walls have a change in spacing therebetween during articulating to the left and the right, so that they move closer on one side and further apart on the other side as the portions articulate, and wherein there are provided flexible confining members between the side walls arranged to accommodate said change in spacing.

Preferably, the boar cart further comprises a second pivotal coupling thus allowing articulation about two longitudinally-spaced parallel axes each substantially on the centre line.

Preferably, the pivot coupling includes a lock for locking the front and rear portions in the straight-ahead aligned position.

Preferably, the cage assembly further comprises at least one drive wheel for driving the cage assembly along the alleyways, and at least one steerable wheel for guiding the cage assembly along the alleyways.

Preferably, at least one of the cage front and the cage rear is bowed outwardly such that the height thereof adjacent to the boar projects outwardly relative to the cage floor thereby reducing the length of the floor relative to the total length of the cage assembly to assist in navigating corners.

Preferably, the boar cart further comprises a manually-operable steering device located on the rear portion for operation by a person standing behind the rear portion, and operable to effect steering movements of the front portion for navigating the corners.

Embodiments of the invention will now be described in conjunction with the accompanying drawings, in which:-
Figure 1 is a top plan view of a first embodiment of cart according to the present invention showing the cart in the straight-ahead position.
Figure 2 is a bottom plan view of the cart of Figure 1 with the cart in its position turned to one side for navigating a right hand corner.
Figure 3 is a side elevational view of the cart of Figure 1.
Figure 4 is a bottom plan view similar to that of Figure 2 showing more detail of the front steering/caster wheels.
Figure 5 is a bottom plan view similar to that of Figure 2 showing a second embodiment according to the present invention.
Figure 6 is a top plan view similar to that of Figure 1 showing a further embodiment according to the present invention.

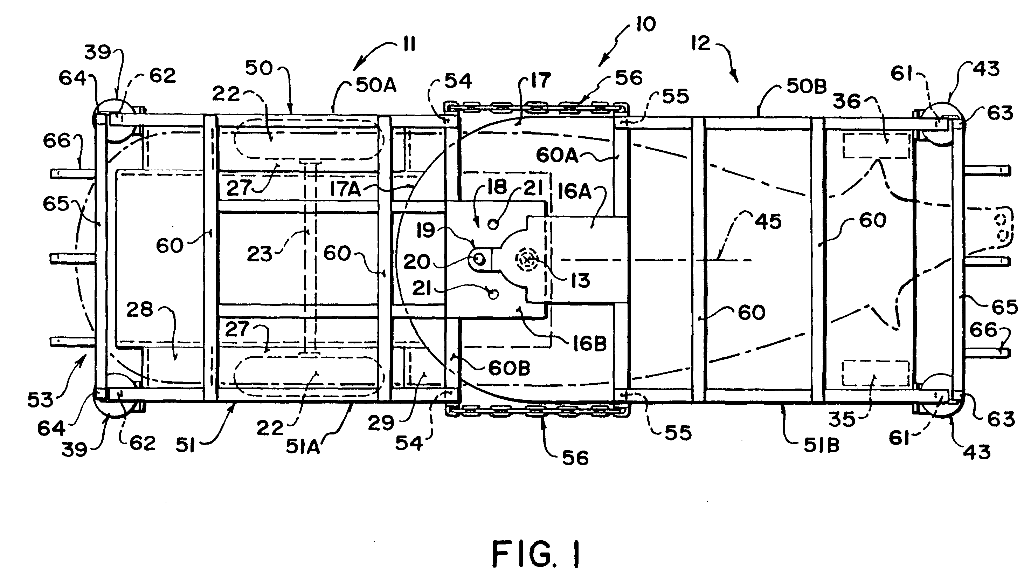

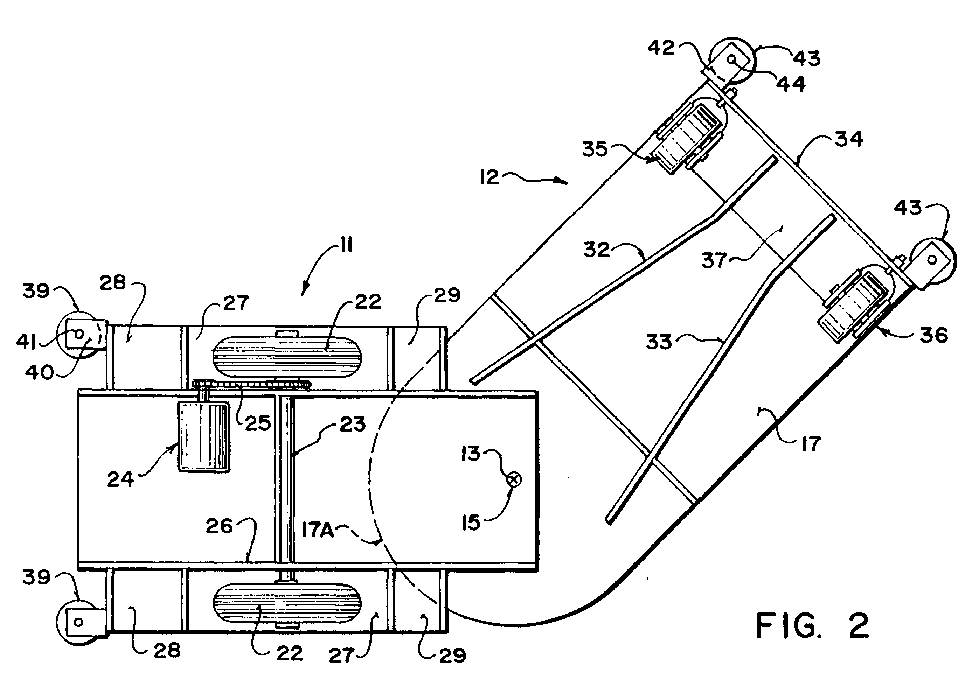

A boar cart is generally indicated at 10 and includes a rear section 11 and a front section 12 which are articulated at a vertical pivot axis 13 allowing the front section to move from a straight ahead aligned position shown in Figure 1 to either a left hand or right hand turned position, one of which is shown in Figure 2.

The pivot axis 13 is defined by a top bearing 14 in overlapping top panels 16 of the cart and a bottom bearing 15 in overlapping bottom floor panels 17 of the cart.

The front and rear portions can be locked in the straight ahead position shown in Figure, and preferably in the left and right turned positions, 1 by a pin lock system 18 including an arm 19 connected to the front portion which extends rearwardly over the rear portion to a pull pin 20 which engages into one of three separate holes 21 at the three separate positions. The pull pin 20 is spring biased into a locked position and is moved against the spring bias to a pulled position manually as required.

The rear section 11 is mounted on a pair of drive wheels 22 carried on an axle 23. One or both of the drive wheels is driven by a motor 24 communicating through a drive chain 25 mounted at or beneath the floor 17. The wheels 22 are mounted each on a respective side of a main longitudinal rail 26 of the section 11 with each wheel being covered at its position outside of the respective rail 26 by a fender 27. The fenders 27 each extend between frame channel members 28 and 29 extending outwardly from the rails 26 to a respective side. Between the rails 26 is defined a floor on which the rear part of the animal and the rear legs of the animal stand.

The motor 24 is controlled by an electrical control system 30 provided within a housing on the top 16 of the cart. The electrical control system 30 includes an antenna 31 which receives communications from a remote control system using a suitable communication medium so that the farm hand can remotely operate the cart to drive the wheels 22 forwardly and rearwardly as required. The wheels 22 are not steering wheels and simply drive the cart forwardly and rearwardly.

The front section 12 includes a planar floor panel 17 which is supported by rails 32 and 33 extending rearwardly from a forward edge 34 of the floor panel and diverging outwardly so as to leave a rear area of the floor panel 17 at the bearing 15 which overlies a front rectangular section of the floor 17 of the rear portion of the cart. A rear edge of the floor panel 17 of the front section defines a semi circular rear line 17A surrounding the bearing 15 and the axis 13 and this rear portion can therefore sweep over the top surface of the rear floor panel and moves in front of the wheels 22 and in front of the fenders 27.

The front portion 12 is mounted on a pair of castor wheels 35 and 36 carried on the underside of a transverse brace 37 at the front edge 34. Thus the direction of movement of the cart is controlled by the castor wheels as described hereinafter.

The rear channel members 28 of the rear section 11 each carry a bumper or guide roller 39 which is carried on a bracket 40 allowing rotation of the guide roller about a vertical mounting pin 41. Similarly a bracket 42 on the brace 37 carries a front bumper roller 43 pivotal about a vertical pin 44. The bumper rollers 39 and 43 are thus mounted at a common height on the front and rear portions and project outwardly therefrom slightly to each side and at a position in front of and rearwardly of respectively the front and rear edges of the floor panels 17.

The bumper rollers 39, 43 are mounted at a height which coincides with a suitable rail on the pens at the side of the alleyway against which or adjacent which the cart is intended to run.

The pivot axis 13 is arranged so that it lies on or adjacent a center line 45 of the cart in its aligned position shown in Figure 1. The axis 13 is also approximately midway between the front edge 34 of the front portion and the rear edge of the rear portion. Thus the pivotal action provides articulation of the two portions to a position which the angle of the center line of the front portion is arranged approximately at 45° to the center line of a rear portion. This is of course symmetrical in both left and right directions in view of the fact that the pivot axis lies on the center line.

The cart is further formed by two side walls 50 and 51 the front wall 52 and a rear wall 53. Each of these walls is formed by bars allowing visual and direct physical access to the animal within the cart over the full area of the cart both to the rear, the front and the sides. The side walls are divided into two sections such that the rear portion 11 has its own side wall section 50A, 51A and the front section has its own side wall section 50B, 51B. The side wall 51A terminates at a front post 54 and the side wall 51B terminates at a rear post 55 with those posts separated rearwardly and forwardly respectively of the pivot axis 13. There is no direct rigid connection between the posts 54 and 55 so that the pivotal action about the axis 13 allows the post 54 and 55 to move closer together as the cart articulates to one side and to move further apart as the cart articulates to the other side. The post 54 and 55 are however connected by loose flexible chains 56 which have respective ends connected to the respective posts and which hang down as a loose connection bridging the space between the posts and acting the confine the animal in the area between the post to ensure that the animal is prevented from escape between the posts.

The side walls including the main mounting posts are attached to the floor so as to stand upwardly therefrom adjacent the outermost edge thereof and particularly the rear side walls stand upwardly from the outer edge of the portions 28 and 29. The top of the side rails are connected by transverse bars 60 which maintain the side walls in fixed vertical position and also provide a top or roof structure again providing the animal and prevent it from jumping upwardly to attempt to escape over the side walls. The top bearing 14 is connected to overlapping panels 16A and 16B carried respectively by a rear rail 60A of the front part and a front rail 60B of the rear part. The cage assembly may include flat closed panels covering or replacing the bars for additional strength if required.

The front wall 52 and the rear wall 53 are both formed as separate pivotal elements attached to a front post 61 of the front section and to a rear post 62 of the rear section respectively. Thus the front wall 52 includes two side posts 63 which can be pinned to respective ones of the posts 61 to hold the front wall fixed in place. Similarly the rear wall 53 includes posts 64 which can be pinned to the post 62 to hold the rear wall in place. One of or both of the front and rear walls can be removed by simply removing the pins so that the wall can be totally removed or can be removed at one side or disconnected from its respective post and pivoted away from the other post to allow access for entry or exit of the animal. Preferably both the front and rear walls are pivotal for removal in this manner so as to allow the animal to enter from the rear and exit from the front.

The front and rear walls further include top and bottom rails 65 and 65A respectively which extend across horizontally and interconnect the posts. Furthermore, the front and rear walls further include confining bars 66 which extend generally vertically downwardly from the top rail 65 to the bottom rail 65A. Each of these bars 66 is bowed outwardly from the main plane containing the rail 65 and 65A so that a center section of the bars above the floor projects outwardly from the plane of the wall so as to increase the area within the cart which is accessible for the animal at the height of the rump and the nose of the animal which is approximately midway at the height of the cart and spaced upwardly from the floor. This bowing of the front and rear gates thus allows a reduction in the length of the whole of the cart thus reducing the distance between the front edge of the front section and the rear edge of the rear section and reducing the distance between the bumper rollers 39 and 43 so that the overall length of the cart is significantly reduced while the length of animal which can be accommodated between the outermost points of the bar 66 remains equal to the required length depending upon the size of the animal.

As shown in Figure 1, the boar is schematically within the cart and, although the size of the boars used will of course vary, the cart is designed to take effectively the largest type of boar which would be used and this boar would wholly fill the cart so that its sides touch the side walls, its rump reaches the outwardly bowed section of the bar 66 at the rear of the rear section and its nose projects through or just reaches the bars 66 at the front of the front section. The animal is thus wholly contained and confined and the cart has dimensions which are significantly greater than the size of the animal itself.

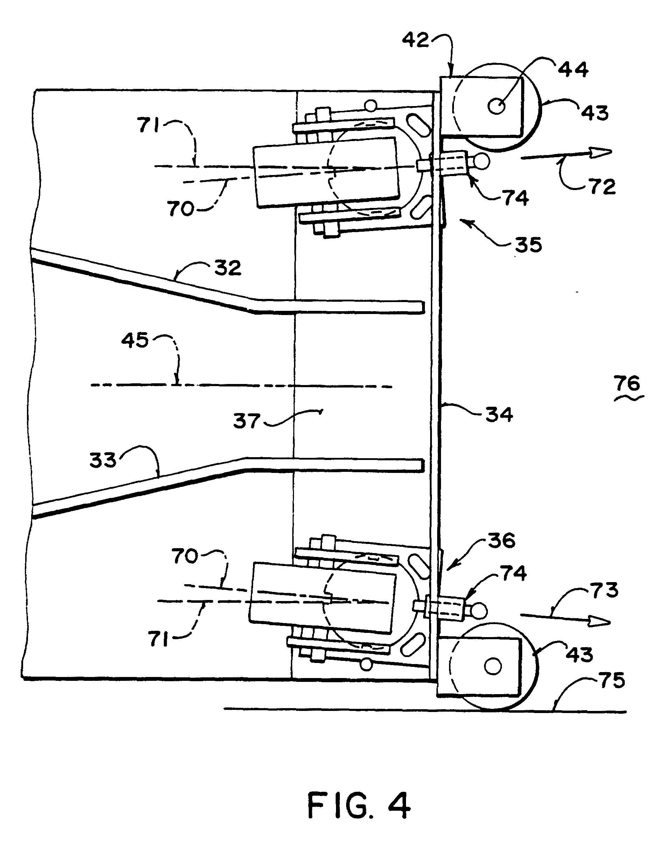

Turning now to Figure 4, further detail of the castor wheels 35 and 36 is shown. It will be noted firstly that the castor wheels are mounted on the underside of the cross brace 37 such that the normal forward direction 70 of the castor is offset at a slight angle to the longitudinal direction 71 of the cart which is parallel to the center line 45. Thus the left hand castor wheel 35 is normally inclined slightly outwardly in a direction forwardly and outwardly as indicated at 72 and the castor wheels 36 is similarly inclined slightly forwardly and outwardly as indicated at 73.

Each castor wheel can be locked in its normal forward direction by a locking pin 74 of a type which is commercially available so that the castor 35, 36 can be locked in its forward direction, 72, 73 or can simply castor as required depending upon the position of the lock 74.

In operation, if it is required that the cart remain alongside the side rail 75 adjacent the castor 36, the castor 36 is locked and the castor 35 is released to be free to castor. Thus both castor wheels will take up a position normally tending to move along the direction 73 thus tending to push the cart as it moves forwardly toward the rail 75 on one side of the alley 76.

Therefore in a situation where there are sows on both sides of the alley 76, the farm hand can select that side of the alley to which the cart tends to move by locking the wheel on that side and releasing the wheel on the other side. Thus as the cart moves forwardly it also tends to push toward one side so that the bumper rollers on that side tend to run along the rail 75.

In some cases the alley is relatively narrow so that the cart in effect just fits between the rails and moves along the alleyway equidistant from each of the rails. In this case both wheels may be set to caster.

However in other arrangements, the alleyway may be significantly wider and it is therefore desired to hold the cart to the side adjacent those sows which are being operated upon by the farm hand. Thus this simple steering system avoids the necessity for remote controlled steering and simply ensures that the cart remains adjacent the required side of the alleyway. The bumper rollers hold the cart at the required position and gently guide the cart as it moves along the alleyway. It will be appreciated that the movement of the cart is very slow in that the cart is often maintained stationary for a period of time and then stepped forward to a next pen of the next adjacent sow.

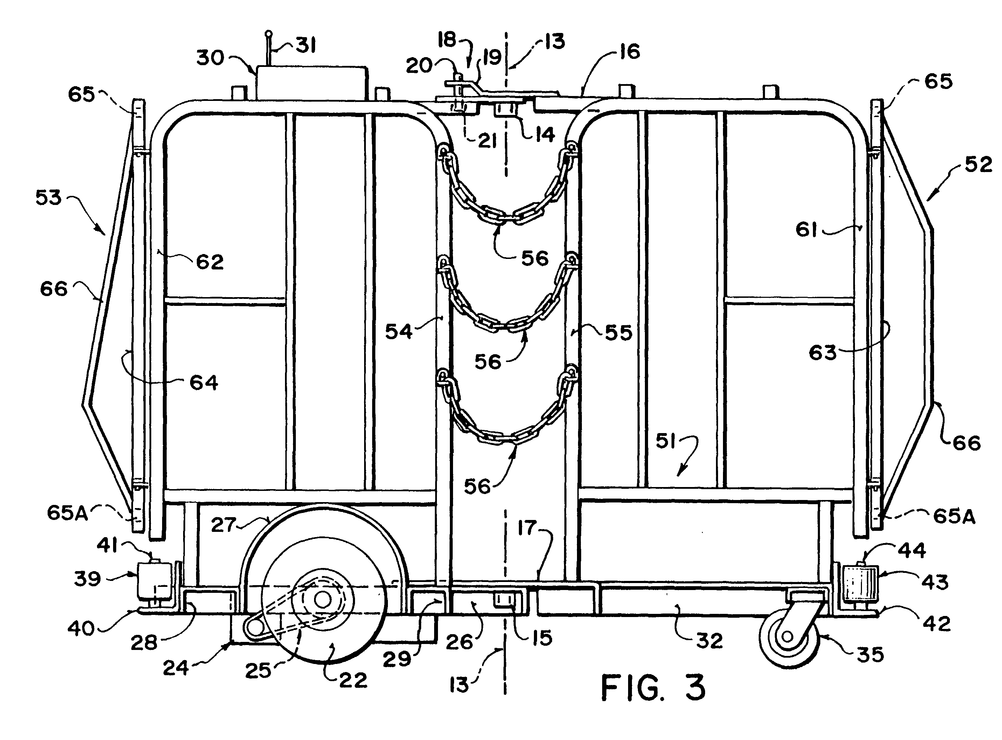

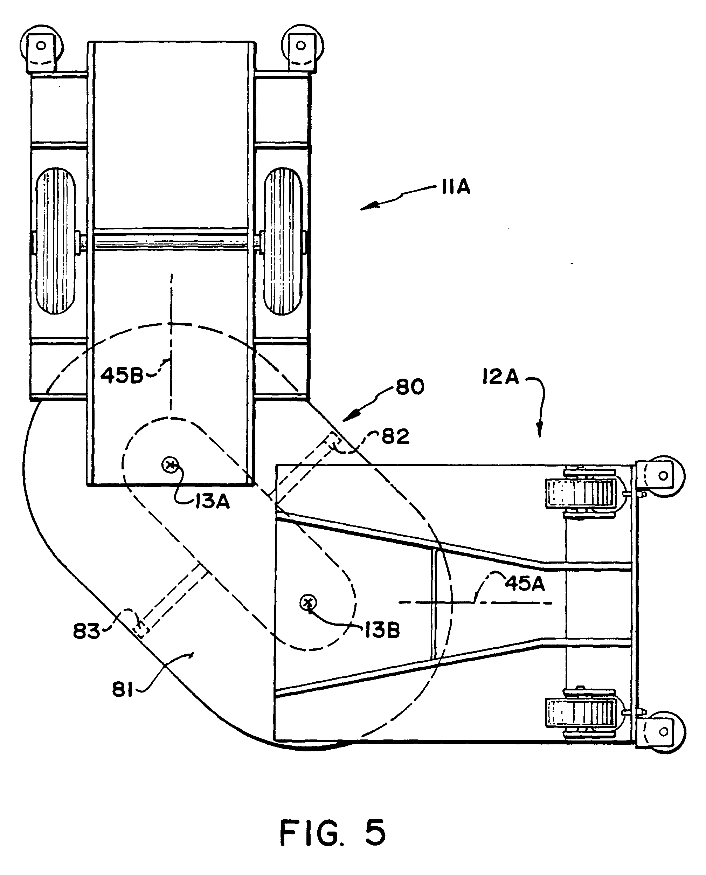

Turning now to Figure 5, there is shown an arrangement which is substantially identical to that of Figures 1 through 4 except that the front section 12A is articulated relative to the rear section 11A by two pivot axes 13A and 13B. This is effected by the provision of an intermediate section 80 defined by a floor panel 81 and two vertical posts 82 and 83 connecting to a top structure 85. Thus the axes 13A and 13B are again defined by top and bottom bearings at the floor panel 81 and at the top panel 85.

The double articulation arrangement of Figure 5 thus allows an increased angle between the front section and the rear section in the articulated position and in particular an arrangement in which the center line 45A of the front section lies at 90° to the center line 45B of the rear section. This of course requires the animal to accommodate a larger angle of bend between its rear and its front section but this allows the cart to move more effectively around a right angle corner particularly where the alleyways are very narrow.

The arrangement has the advantage therefore that the animal can be maintained within the cart at all times while the cart is moved along alleyways and round corners onto the next adjacent alleyway and there is no necessity to remove the animal with the difficulty of returning it to its position should it have any reluctance. The animal is therefore always confined and can be handled by a single farm hand by the remote operation while the farm hand operates upon the sows in conventional manner.

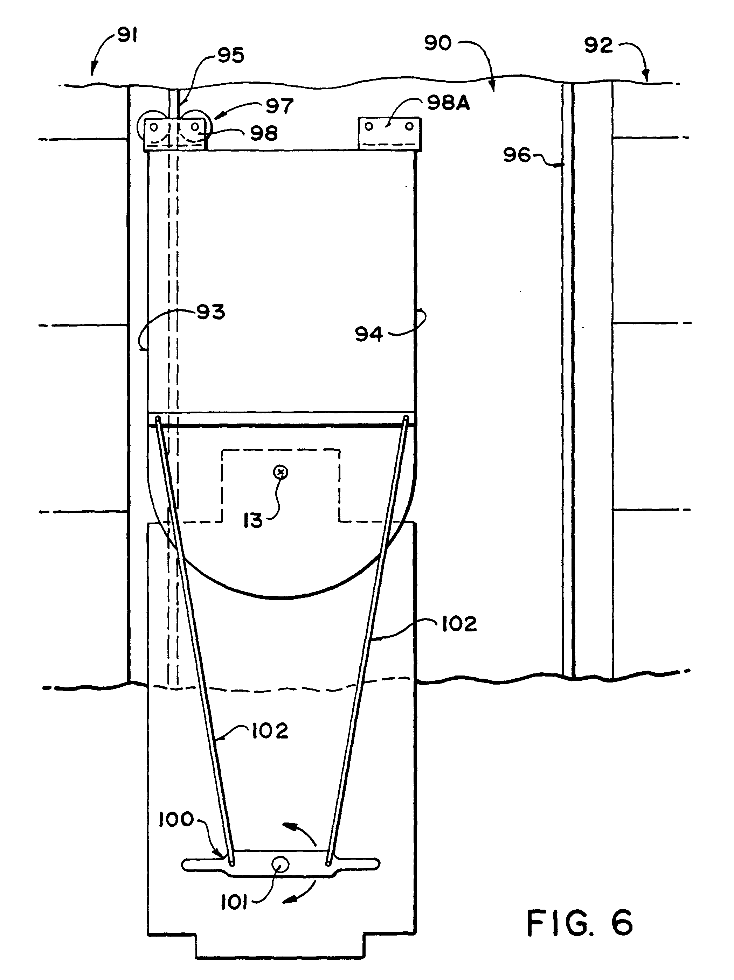

Turning now to Figure 6 there is shown in top plan view schematically an alleyway 90 having a first row of pens 91 on one side and a second row pens 92 on the other side of the alleyway. The width of the alleyway is greater than the width of the cart so that the cart can be adjusted so that it runs with one side 93 adjacent the pen 91 and the other side 94 spaced away from the pens 92 and by vice versa.

Various arrangements for guiding the movement of the cart along the respective selected side can be provided including the arrangement shown previously in Figure 4. However an alternative arrangement is shown in Figure 6 and this includes a pair of guide tracks 95 and 96 which are provided in the alleyway at a suitable location and preferably adjacent the respective line of pens. The tracks 95, 96 and be provided by raised rails cast in or attached to the concrete of the alleyway or can be provided by another ridge or groove in the concrete which thus forms a continuous line or track along the concrete for holding the cart along a predetermined line adjacent the respective selected side.

In the embodiment shown, the track 95 or 96 is followed by a pair of rollers 97 which are attached to the cart on a bracket 98 which can be moved from the left-hand position shown to a right-hand position 98A to guide the cart along the selected one of the tracks 95, 96.

Also in figure 6 is shown a steering arrangement which can be used by a person walking behind the cart at the corner between an alleyway and an end alley to direct the cart around the corner. Thus a lever arrangement 100 is provided on the top of the rear cart section which in the example shown is in the form of handlebars which can pivot about a vertical pivot axis 101. The lever connects by two directly extending cables 102 to respective sides of the front cart section thus acting to pull the front cart section to the required steering direction to effect the turn around the corer as the cart moves slowly forward. This can be effected by a single operator from behind without moving or disturbing the boar in the cart and without undue physical effort. The simple cables can be replaced by more complex linkage such as cable and pulley arrangements or chains driving a sprocket centered on the pivot axis 13. The handlebars can be replaced by other lever arrangement or by a manual or motor driven winch which pulls the cables or chain.

## Claims

1. A boar cart for carrying a boar through alleyways of a sow insemination area for interaction with the sows during insemination, the cart comprising;
a cage assembly (10) for containing the boar, the assembly comprising a cage floor (17) on which the boar stands, two cage sides (50, 51) each on a respective side of a longitudinal centre line (45) of the cage assembly for confining the boar so that the boar is maintained extending longitudinally of the cage assembly, a cage front (52) and a cage rear (53) for confining the boar against forward and rearward movement;
the cage assembly having at least one door (65) allowing entry and exit of the boar from the cage assembly;
the cage assembly being mounted on ground wheels (22, 35) for movement generally longitudinally along an alleyway carrying the boar within the cage assembly;
the cage assembly having a front portion (12) for receiving the front feet and forward portion of the boar, and a rear portion (11) for receiving the rear feet and rearward portion of the boar; and
the front portion being connected to the rear portion for pivotal movement about a vertical pivot axis to allow the cage assembly to navigate around a corner from one alleyway to another;
**characterised in that** the pivotal movement is provided by a pivot coupling (14, 15) locating the vertical pivot axis (13) substantially at the centre line (45) such that the cage assembly can articulate from a straight-ahead, aligned position both to the left and to the right for navigating left and right corners in the alleyways while the boar is retained in the cage assembly.

2. A boar cart according to claim 1, wherein the cage assembly (10) includes a top member (16) parallel to the floor (17), the top member being arranged at a top of the side walls, and wherein the pivot coupling (14, 15) includes a first bearing member (15) at the floor and a second bearing member (14) at the top member.

3. A boar cart according to claim 1 or claim 2, wherein the front portion (12) includes a front portion of the floor, and the rear portion (11) includes a rear portion of the floor, with the front portion of the floor and the rear portion of the floor being arranged to overlap at the straight-ahead position and when articulated to the left and to the right to allow the boar to stand on the floor while the boar is retained in the cage assembly.

4. A boar cart according to any one of claims 1 to 3, wherein the side walls (51) of the front portion (12) are separate from the side walls of the rear portion (11) such that the side walls have a change in spacing therebetween during articulating to the left and the right, so that they move closer on one side and further apart on the other side as the portions articulate, and wherein there are provided flexible confining members (56) between the side walls arranged to accommodate said change in spacing.

5. A boar cart according to any one of claims 1 to 4, further comprising a second pivotal coupling (13A, 13B) thus allowing articulation about two longitudinally-spaced parallel axes each substantially on the centre line (45A, 45B).

6. A boar cart according to any one of claims 1 to 5, wherein the pivot coupling includes a lock (18) for locking the front and rear portions in the straight-ahead aligned position.

7. A boar cart according to any one of claims 1 to 6, wherein the cage assembly further comprises at least one drive wheel (22) for driving the cage assembly along the alleyways, and at least one steerable wheel (35) for guiding the cage assembly along the alleyways.

8. A boar cart according to any one of claims 1 to 7, wherein at least one of the cage front (52) and the cage rear (53) is bowed (66) outwardly such that the height thereof adjacent to the boar projects outwardly relative to the cage floor thereby reducing the length of the floor (17) relative to the total length of the cage assembly to assist in navigating corners.

9. A boar cart according to any one of claims 1 to 8, further comprising a manually-operable steering device (100) located on the rear portion (11) for operation by a person standing behind the rear portion, and operable to effect steering movements of the front portion (12) for navigating the corners.

## Revendications

1. Un chariot pour verrat destiné à transporter un verrat dans les allées d'un centre d'insémination de truies afin que le verrat soit en contact avec les truies pendant l'insémination, le chariot comprend ;
un assemblage de cage (10) pour contenir le verrat, l'assemblage comprenant un plancher de cage (17) sur lequel repose le verrat, deux parois latérales de cages (50, 51) chacune étant placée sur le côté respectif d'une ligne centrale longitudinale (45) de l'assemblage de cage pour contenir le verrat de manière à ce que le verrat soit maintenu, s'étendant longitudinalement par rapport à l'assemblage de cage, une paroi de cage avant (52) et une paroi de cage arrière (53) pour maintenir le verrat et prévenir les mouvements vers l'avant ou l'arrière ;
l'assemblage de cage ayant au moins une porte (65) permettant de faire entrer et sortir le verrat de l'assemblage de cage ;
l'assemblage de cage étant monté sur roues (22, 35) en vue d'assurer le déplacement généralement longitudinalement le long d'une allée transportant le verrat à l'intérieur de l'assemblage de cage ;
l'assemblage de la cage ayant une portion avant (12) pour recevoir les pieds antérieurs et la partie avant du verrat, et une portion arrière (11) pour recevoir les pieds postérieurs et la partie arrière du verrat ; et
la portion avant étant reliée à la portion arrière pour permettre un mouvement pivotal autour d'un axe de pivot vertical afin de permettre à l'assemblage de cage de manoeuvrer dans un angle d'une allée à l'autre ;
**caractérisé en ce que** le mouvement pivotal est assuré par un accouplement par pivot (14, 15) positionnant l'axe de pivot vertical (13) essentiellement au niveau de la ligne centrale (45) de sorte que l'assemblage de cage peut pivoter d'une position alignée droite à la fois vers la gauche et vers la droite afin de manoeuvrer dans les angles gauche et droit dans les allées tandis que le verrat est retenu dans l'assemblage de cage.

2. Chariot pour verrat selon la revendication 1, dans lequel l'assemblage de cage (10) comprend un élément supérieur (16) parallèle au plancher (17), l'élément supérieur étant disposé sur le haut des parois latérales et dans lequel l'accouplement par pivot (14, 15) inclut un premier élément de soutien (15) au niveau du plancher et un second élément de soutien (14) au niveau de l'élément supérieur.

3. Chariot pour verrat selon la revendication 1 ou 2, dans lequel la portion avant (12) inclut une portion avant du plancher, et la portion arrière (11) inclut une portion arrière du plancher, la portion avant du plancher et la portion arrière du plancher étant disposées de manière à se chevaucher en position droite et lorsqu'elles sont tournées vers la gauche et vers la droite pour permettre au verrat de reposer sur le plancher alors que le verrat est retenu dans l'assemblage de cage.

4. Chariot pour verrat selon l'une quelconque des revendications 1 à 3 dans lequel les parois latérales (51) de la portion avant (12) sont séparées des parois latérales de la portion arrière (11) de manière à ce que les parois latérales possèdent un changement d'écart entre elles lors du mouvement d'articulation vers la gauche et vers la droite, de sorte qu'elles se rapprochent d'un côté et qu'elles s'écartent de l'autre côté lorsque les portions tournent et dans lequel il est prévu des éléments de confinement flexibles (56) entre les parois latérales disposées de manière à tenir compte dudit changement d'écart.

5. Chariot pour verrat selon l'une quelconque des revendications 1 à 4, comprenant en outre un second accouplement par pivot (13A, 13B) permettant ainsi l'articulation autour de deux axes parallèles longitudinalement espacés essentiellement sur la ligne centrale (45A, 45B).

6. Chariot pour verrat selon l'une quelconque des revendications 1 à 5, dans lequel le pivot par accouplement inclut un verrou (18) pour verrouiller les portions avant et arrière en position alignée droite.

7. Chariot pour verrat selon l'une quelconque des revendications 1 à 6, dans lequel l'assemblage de cage comprend en outre au moins une roue d'entraînement (22) pour faire rouler l'assemblage de cage le long des allées et au moins une roue orientable (35) pour guider l'assemblage de cage le long des allées.

8. Chariot pour verrat selon l'une quelconque des revendications 1 à 7, dans lequel au moins une paroi avant de la cage (52) et de la cage arrière (53) est courbée (66) vers l'extérieur de sorte que la hauteur de celle-ci adjacente au verrat se projette vers l'extérieur relativement au plancher de la cage réduisant de cette manière la longueur du plancher (17) relativement à la longueur totale de l'assemblage de cage afin de faciliter la manoeuvre dans les angles.

9. Chariot pour verrat selon l'une quelconque des revendications 1 à 8, comprenant en outre un dispositif d'orientation à commande manuelle (100) situé sur la portion arrière (11) prévu pour être utilisé par une personne se tenant derrière la portion arrière et utilisable pour diriger la portion avant (12) pour manoeuvrer dans les angles.

## Patentansprüche

1. Eberkarren zum Befördern eines Ebers durch Gänge eines Saubesamungsbereichs zur Interaktion mit den Säuen während der Besamung, wobei der Karren umfasst:
eine Käfiganordnung (10) zur Aufnahme des Ebers, wobei die Anordnung einen Käfigboden (17), auf welchem der Eber steht, zwei Käfigseiten (50, 51), jede auf einer jeweiligen Seite einer Längsmittellinie (45) der Käfiganordnung zum derartigen Begrenzen des Ebers, dass der Eber der Länge der Käfiganordnung nach erstreckt gehalten wird, eine Käfigvorderseite (52) und eine Käfigrückseite (53) zum Begrenzen des Ebers gegen Vorwärts- und Rückwärtsbewegung umfasst;
die Käfiganordnung wenigstens eine Tür (65) aufweist, welche den Eintritt und den Austritt des Ebers aus der Käfiganordnung erlaubt;
die Käfiganordnung zur Bewegung im Allgemeinen der Länge nach entlang eines Ganges auf Bodenrädern (22, 35) angebracht ist, wobei der Eber innerhalb der Käfiganordnung befördert wird;
die Käfiganordnung einen Vorderabschnitt (12) zur Aufnahme der Vorderfüße und des vorderen Abschnitts des Ebers und einen Rückabschnitt (11) zur Aufnahme der Hinterfüße und des hinteren Abschnitts des Ebers aufweist;
der Vorderabschnitt zur Drehbewegung um eine vertikale Drehachse mit dem Rückabschnitt verbunden ist, damit die Käfiganordnung um eine Ecke von einem Gang zu einem anderen fahren kann;
**dadurch gekennzeichnet, dass** die Drehbewegung durch eine Drehverbindung (14, 15) bereitgestellt wird, welche die vertikale Drehachse (13) im Wesentlichen an der Mittellinie (45) anordnet, so dass die Käfiganordnung von einer geradeaus ausgerichteten Position zum Umfahren von linken und rechten Ecken in den Gängen sowohl nach links als auch nach rechts angelenkt werden kann, während der Eber in der Käfiganordnung gehalten wird.

2. Eberkarren nach Anspruch 1, wobei die Käfiganordnung (10) ein Dachelement (16) parallel zum Boden (17) umfasst, wobei das Dachelement an einer Oberseite der Seitenwände angeordnet ist, und wobei die Drehverbindung (14, 15) ein erstes Lagerelement (15) am Boden und ein zweites Lagerelement (14) am Dachelement umfasst.

3. Eberkarren nach Anspruch 1 oder 2, wobei der Vorderabschnitt (12) einen Vorderabschnitt des Bodens umfasst und der Rückabschnitt (11) einen Rückabschnitt des Bodens umfasst, wobei der Vorderabschnitt des Bodens und der Rückabschnitt des Bodens so angeordnet sind, dass sie einander in der Geradeausposition und beim Anlenken nach links und nach rechts überlappen, damit der Eber auf dem Boden stehen kann, während der Eber in der Käfiganordnung gehalten wird.

4. Eberkarren nach einem der Ansprüche 1 bis 3, wobei die Seitenwände (51) des Vorderabschnitts (12) von den Seitenwänden des Rückabschnitts (11) getrennt sind, so dass die Seitenwände während des Anlenkens nach links und rechts eine Änderung im Abstand dazwischen aufweisen, so dass sie sich auf einer Seite näher zueinander und auf der anderen Seite weiter auseinander bewegen, wenn die Abschnitte angelenkt werden, und wobei flexible Begrenzungselemente (56) zwischen den Seitenwänden vorgesehen sind, welche angeordnet sind, um die Änderung im Abstand anzupassen.

5. Eberkarren nach einem der Ansprüche 1 bis 4, welcher des Weiteren eine zweite Drehverbindung (13A, 13B) umfasst, welche Anlenken um zwei der Länge nach beabstandete parallele Achsen, jede im Wesentlichen auf der Mittellinie (45A, 45B), erlaubt.

6. Eberkarren nach einem der Ansprüche 1 bis 5, wobei die Drehverbindung einen Riegel (18) zum Verriegeln der Vorder- und Rückabschnitte in der geradeaus ausgerichteten Position umfasst.

7. Eberkarren nach einem der Ansprüche 1 bis 6, wobei die Käfiganordnung des Weiteren wenigstens ein Antriebsrad (22) zum Antreiben der Käfiganordnung entlang der Gänge und wenigstens ein steuerbares Rad (35) zum Führen der Käfiganordnung entlang der Gänge umfasst.

8. Eberkarren nach einem der Ansprüche 1 bis 7, wobei wenigstens entweder die Käfigvorderseite (52) oder die Käfigrückseite (53) nach außen gebogen sind, so dass die Höhe davon benachbart zum Eber in Bezug auf den Käfigboden nach außen vorsteht, wodurch die Länge des Bodens (17) in Bezug auf die Gesamtlänge der Käfiganordnung verkürzt wird, um beim Umfahren von Ecken zu helfen.

9. Eberkarren nach einem der Ansprüche 1 bis 8, welcher des Weiteren eine manuell bedienbare Steuervorrichtung (100) umfasst, welche zur Bedienung durch eine Person, welche hinter dem Rückabschnitt steht, am Rückabschnitt (11) angeordnet ist und bedienbar ist, um Steuerbewegungen des Vorderabschnitts (12) zum Umfahren der Ecken zu bewirken.
